# EUROPÄISCHE PATENTSCHRIFT

(11) **EP 2 954 938 B1**
(45) Veröffentlichungstag und Bekanntmachung des Hinweises auf die Patenterteilung: **17.06.2020**
(21) Anmeldenummer: 15167209.4
(22) Anmeldetag: 10.03.2011
(51) Int. Cl.: A63C 17/04, B62K 15/00, B62K 3/00, A45C 5/14, B62B 5/00, B62B 5/08, B62B 1/12

(54) **KLAPPBARER TRETROLLER MIT GEPÄCKTRÄGER**
FOLDABLE SCOOTER WITH LUGGAGE CARRIER
TROTTINETTE PLIANTE AVEC PORTE-BAGAGE

(30) Priorität: 10.03.2010 DE 202010003434 U
(43) Veröffentlichungstag der Anmeldung: 16.12.2015
(62) Teilanmeldung aus: 11708799.9
(73) Patentinhaber: Floh Enterprises GmbH, 21521 Friedrichsruh (DE)
(72) Erfinder: von Bismarck, Gregor, 21521 Friedrichsruh (DE)
(74) Vertreter: Eisenführ Speiser

(56) Entgegenhaltungen:
- WO-A1-2009/141629
- DE-A1- 10 204 478

## Beschreibung

Die Erfindung betrifft ein fahrbares Gerät, mit einem flächigen Element, mindestens einem um eine erste Drehachse rotierend gelagerten ersten Rad, einer Griffstütze, die ein vom flächigen Element distales Ende, das einen Griff trägt, und ein zum flächigen Element proximales Ende aufweist, einem benachbart zum ersten Rad befindlichen Klappgelenk, das das proximale Ende der Griffstütze mit dem flächigen Element derart um eine erste Schwenkachse schwenkbar verbindet, dass in einem Betriebszustand die Griffstütze gegenüber dem flächigen Element in einem, vorzugsweise etwa rechten oder nahezu rechten, Winkel ausgerichtet ist und somit das distale Ende der Griffstütze einen maximalen Abstand zum flächigen Element aufweist und in einem Ruhezustand das distale Ende der Griffstütze einen minimalen Abstand vom flächigen Element aufweist, mindestens einem um eine zweite Drehachse rotierend gelagerten zweiten Rad, das an einem von der Anordnung aus erstem Rad und Klappgelenk beabstandeten entfernten Ende des flächigen Elementes angeordnet ist, wobei das erste Rad zusätzlich um eine winklig, vorzugsweise etwa rechtwinklig, zur ersten Drehachse verlaufende dritte Schwenkachse derart schwenkbar gelagert ist, dass eine Schwenkbewegung um diese dritte Schwenkachse eine Änderung der Fahrtrichtung bewirkt, die Griffstütze eine Lenkstange ist und eine Lenkmechanik vorgesehen ist, die bestimmte Bewegungen der Griffstütze in Schwenkbewegungen des ersten Rades um die dritte Schwenkachse umwandelt, in axialem Abstand vom ersten Rad ein drittes Rad vorgesehen ist, das in der gleichen Weise wie das erste Rad gelagert ist, wobei der axiale Abstand mindestens geringfügig größer als die Breite des zwischen den ersten und dritten Rädern befindlichen Abschnittes des an der Griffstütze zu befestigenden Gepäckstückes ist, das dritte Rad zusätzlich um eine winklig, vorzugsweise etwa rechtwinklig, zur ersten Drehachse verlaufende vierte Schwenkachse derart schwenkbar gelagert ist, dass eine Schwenkbewegung um diese vierte Schwenkachse eine Änderung der Fahrtrichtung bewirkt, und die Lenkmechanik vorgesehen ist, bestimmte Bewegungen der Griffstütze ebenfalls in Schwenkbewegungen des dritten Rades um die vierte Schwenkachse umzuwandeln, und mit Arretierungsmitteln zur Arretierung der Lenkmechanik, welche so ausgebildet sind, dass sie nur im Ruhezustand die Lenkmechanik in einer neutralen Stellung, vorzugsweise etwa für den Geradeauslauf, arretieren.

Ein solches fahrbares Gerät ist beispielsweise aus der DE 102 04 478 A1 bekannt.

Fahrbare Geräte der eingangs genannten Art sind gewöhnlich als Roller, Scooter, Kickboard oder Rollbrett ausgebildet, welche mithilfe von unterschiedlichen Lenktechniken und unterschiedlicher Anzahl von Rollen funktionieren können. Wird das fahrbare Gerät benutzt, liegen im Betriebszustand die Räder auf einer Verkehrsfläche oder einem sonstigen Untergrund auf, wodurch das flächige Element in einem Abstand über der Verkehrsfläche oder dem sonstigen Untergrund gehalten wird und dabei im Regelfall etwa waagerecht ausgerichtet ist. In diesem Zustand dient das flächige Element als Tritt für den Benutzer, der sich gleichzeitig am Griff am oberen distalen Ende der im Betriebszustand hochgeklappten Griffstütze festhält. Vielfach kann die Griffstütze gleichzeitig auch zum Lenken verwendet werden und hierfür als Lenkstange ausgebildet oder mit einem entsprechenden Lenkmechanismus gekoppelt sein. Der Antrieb eines derartigen fahrbaren Gerätes kann wahlweise durch Körpereinsatz des Benutzers, indem sich dieser mit einem Fuß von der Verkehrsfläche oder dem sonstigen Untergrund abstößt, oder auch mithilfe eines gewöhnlich am flächigen Element montierten Motors erfolgen, der üblicherweise aus einem kleinen Elektromotor oder Verbrennungsmotor besteht.

In der WO 2008/071 798 A1 und der US 6 460 866 B1 beispielsweise ist jeweils ein fahrbares Gerät der eingangs genannten Art offenbart, bei welchem an der Griffstütze ein Gepäckstück montiert ist. Hierbei bilden das fahrbare Gerät und das Gepäckstück bevorzugt eine Einheit nach Art eines fahrbaren Gepäckstückes, welches im hochgeklappten Zustand bzw. im Ruhezustand des Trittbrettes als herkömmlicher Rollkoffer und im aufgeklappten Zustand bzw. im Betriebszustand als Roller verwendet werden kann, um auf diese Weise bequem größere Entfernungen überbrücken zu können.

Zum Zwecke einer Platz sparenden Aufbewahrung oder eines einfachen Transportes besteht die Möglichkeit, die Griffstütze und das flächige Element bezüglich ihrer relativen Anordnung und Ausrichtung zueinander von einem Betriebszustand in einen Platz sparenden Ruhezustand zu verbringen. Im Betriebszustand ist die Griffstütze gegenüber dem flächigen Element aufgeklappt und in einem, vorzugsweise etwa rechten oder nahezu rechten, Winkel ausgerichtet, indem das distale Ende der Griffstütze einen maximalen Abstand vom flächigen Element bzw. von dessen von der Anordnung aus erstem Rad und Klappgelenk beabstandeten entfernten Ende aufweist. Demgegenüber sind im Ruhezustand die Griffstütze und das flächige Element so zueinander angeordnet, dass sich das distale Ende der Griffstütze in einem minimalen Abstand vom flächigen Element bzw. von dessen von der Anordnung aus erstem Rad und Klappgelenk beabstandeten entfernten Ende befindet, und liegen somit bevorzugt nebeneinander. Bei einer Verwendung des fahrbaren Gerätes mit einem Gepäckstück gemäß der WO 2008/071 798 A1 kann bevorzugt das Gepäckstück an der zum Trittbrett weisenden Seite der Griffstütze montiert und das Klappgelenk so angeordnet sein, dass im Ruhezustand das Trittbrett an der von der Griffstütze abgewandten Seitenfläche des Gepäckstückes hochgeklappt ist und an dieser im Wesentlichen anliegt und somit die Griffstütze und das Trittbrett das Gepäckstück zwischen sich einschließen.

Es ist Aufgabe der vorliegenden Erfindung, für die Arretierungsmittel zur Arretierung der Lenkmechanik eine verbesserte Konstruktion anzugeben.

Diese Aufgabe wird gelöst mit einem fahrbaren Gerät, mit einem flächigen Element, mindestens einem um eine erste Drehachse rotierend gelagerten ersten Rad, einer Griffstütze, die ein vom flächigen Element distales Ende, das einen Griff trägt, und ein zum flächigen Element proximales Ende aufweist, einem benachbart zum ersten Rad befindlichen Klappgelenk, das das proximale Ende der Griffstütze mit dem flächigen Element derart um eine erste Schwenkachse schwenkbar verbindet, dass in einem Betriebszustand die Griffstütze gegenüber dem flächigen Element in einem, vorzugsweise etwa rechten oder nahezu rechten, Winkel ausgerichtet ist und somit das distale Ende der Griffstütze einen maximalen Abstand zum flächigen Element aufweist und in einem Ruhezustand das distale Ende der Griffstütze einen minimalen Abstand vom flächigen Element aufweist, mindestens einem um eine zweite Drehachse rotierend gelagerten zweiten Rad, das an einem von der Anordnung aus erstem Rad und Klappgelenk beabstandeten entfernten Ende des flächigen Elementes angeordnet ist, wobei das erste Rad zusätzlich um eine winklig, vorzugsweise etwa rechtwinklig, zur ersten Drehachse verlaufende dritte Schwenkachse derart schwenkbar gelagert ist, dass eine Schwenkbewegung um diese dritte Schwenkachse eine Änderung der Fahrtrichtung bewirkt, die Griffstütze eine Lenkstange ist und eine Lenkmechanik vorgesehen ist, die bestimmte Bewegungen der Griffstütze in Schwenkbewegungen des ersten Rades um die dritte Schwenkachse umwandelt, in axialem Abstand vom ersten Rad ein drittes Rad vorgesehen ist, das in der gleichen Weise wie das erste Rad gelagert ist, wobei der axiale Abstand mindestens geringfügig größer als die Breite des zwischen den ersten und dritten Rädern befindlichen Abschnittes des an der Griffstütze zu befestigenden Gepäckstückes ist, das dritte Rad zusätzlich um eine winklig, vorzugsweise etwa rechtwinklig, zur ersten Drehachse verlaufende vierte Schwenkachse derart schwenkbar gelagert ist, dass eine Schwenkbewegung um diese vierte Schwenkachse eine Änderung der Fahrtrichtung bewirkt, und die Lenkmechanik vorgesehen ist, bestimmte Bewegungen der Griffstütze ebenfalls in Schwenkbewegungen des dritten Rades um die vierte Schwenkachse umzuwandeln, und mit Arretierungsmitteln zur Arretierung der Lenkmechanik, welche so ausgebildet sind, dass sie nur im Ruhezustand die Lenkmechanik in einer neutralen Stellung, vorzugsweise etwa für den Geradeauslauf, arretieren, dadurch gekennzeichnet, dass die Arretierungsmittel einen Drehhebel, der am proximalen Ende der Griffstütze gegenüber dieser drehfest angeordnet ist und in dessen freiem Ende eine Aussparung ausgebildet ist, und einen Stift aufweisen, der radial an einem Gelenk angeordnet ist, das um eine etwa parallel zur ersten Schwenkachse verlaufende fünfte Schwenkachse schwenkbar und gegenüber dem flächigen Element drehfest angeordnet ist, wobei die Anordnung und Ausrichtung des Drehhebels und der Aussparung in dessen freiem Ende sowie des radialen Stiftes am Gelenk derart getroffen ist, dass im Ruhezustand der Stift von der Aussparung aufgenommen wird, wenn die Griffstütze in eine solche Längsstellung gedreht wird, in der sich das erste Rad und das dritte Rad in ihrer Geradeausstellung befinden.

Da eine Lenkbarkeit des fahrbaren Gerätes gewünscht wird, ist das erste Rad zusätzlich um eine winklig, vorzugsweise etwa rechtwinklig, zur Drehachse verlaufende dritte Schwenkachse derart schwenkbar gelagert, dass eine Schwenkbewegung um diese dritte Schwenkachse eine Änderung der Fahrtrichtung bewirkt, ist die Griffstütze eine Lenkstange und ist eine Lenkmechanik vorgesehen, die bestimmte Bewegungen der Griffstütze in Schwenkbewegungen des ersten Rades um die dritte Schwenkachse umwandelt. Des weiteren ist in axialem Abstand vom ersten Rad ein drittes Rad vorgesehen, das in gleicher Weise wie das erste Rad gelagert ist, wobei der axiale Abstand mindestens geringfügig größer als die Breite des zwischen dem ersten Rad und dem dritten Rad befindlichen Abschnittes des an der Griffstütze zu befestigenden Gepäckstückes ist. Durch die Verwendung zweier voneinander beabstandeter vorderer Räder lässt sich ein stabileres und deutlich besseres Fahrverhalten erzielen, insbesondere wenn als Nutzlast ein Gepäckstück an der Griffstütze befestigt ist. Für eine optimale Lenkung ist hierzu das dritte Rad zusätzlich um eine winklig, vorzugsweise etwa rechtwinklig, zur ersten Drehachse verlaufende vierte Schwenkachse derart schwenkbar gelagert, dass eine Schwenkbewegung um diese vierte Schwenkachse eine Änderung der Fahrtrichtung bewirkt, und eine Lenkmechanik vorgesehen, bestimmte Bewegungen der Griffstütze ebenfalls in Schwenkbewegungen des dritten Rades um die vierte Schwenkachse umzuwandeln.

Erfindungsgemäß sind jedoch Arretierungsmittel zur Arretierung der Lenkmechanik vorgesehen, welche so ausgebildet sind, dass sie nur im Ruhezustand die Lenkmechanik in einer neutralen Stellung, vorzugsweise etwa für den Geradeauslauf, arretieren. Eine Arretierung der Lenkung im Ruhezustand des Trittbrettes ist von Vorteil, um eine Vergrößerung der effektiven Breite durch Einschlagen der Vorderräder insbesondere in eine der beiden Endstellungen zu verhindern, was ansonsten einen erhöhten Platzbedarf im Ruhezustand zur Folge hätte. Ein weiterer Vorteil der erfindungsgemäßen Arretierungsmöglichkeit für die Lenkung besteht darin, dass im Ruhezustand das fahrbare Gerät mit daran befestigtem Gepäckstück nach Art eines Trolleys verwendet und somit vom Benutzer hinter sich hergezogen werden kann.

Hierzu weisen die Arretierungsmittel einen Drehhebel, der am proximalen Ende der Griffstütze gegenüber dieser drehfest angeordnet ist und in dessem freien Ende eine Aussparung ausgebildet ist, und einen Stift auf, der radial an einem Gelenk angeordnet ist, das um eine etwa parallel zur ersten Schwenkachse verlaufende fünfte Schwenkachse schwenkbar und gegenüber dem flächigen Element drehfest angeordnet ist, wobei die Anordnung und Ausrichtung des Drehhebels und der Aussparung in dessen freiem Ende sowie des radialen Stiftes am Gelenk derart getroffen ist, dass im Ruhezustand der Stift von der Aussparung aufgenommen wird, wenn die Griffstütze in eine solche Längsstellung gedreht wird, in der sich das erste Rad und das dritte Rad in ihrer Gradeausstellung befinden.

Bevorzugte Ausführungen und Weiterbildungen der Erfindung sind in den abhängigen Ansprüchen angegeben.

Vorzugsweise bietet das zweite Rad, das an dem von der Anordnung aus erstem Rad und Klappgelenk beabstandeten entfernten Ende des flächigen Elementes sitzt und somit das hintere Rad bildet, zusätzliches Potenzial für eine Optimierung und Verbesserung der Platz sparenden Wirkung des Ruhezustandes. Denn um im Betriebszustand des fahrbaren Gerätes das flächige Element in einem Abstand über der Verkehrsfläche oder einem sonstigen Untergrund zu halten, steht das hintere zweite Rad von der Unterseite des flächigen Elementes entsprechend ab. Dies tut es aber auch im Ruhezustand, in dem die Griffstütze und das flächige Element zusammengeklappt sind und dadurch die Unterseite des flächigen Elementes nun sozusagen die Außenseite der gesamten Anordnung bildet, von der das zweite Rad nach außen ragt bzw. hervorsteht. Dies ist störend, insbesondere wenn das zweite Rad einen im Verhältnis zur Größe der Gesamtanordnung relativ hohen Platzbedarf hat. Ähnliches gilt auch für ein fahrbares Gerät gemäß der WO 2008/071 798 A1, wenn das im Ruhezustand abstehende zweite Rad einen im Verhältnis zur Größe des Gepäckstückes hohen Platzbedarf hat. Zwar könnte das Problem bei einem zweiten Rad mit kleinerem Durchmesser verringert werden, jedoch leidet darunter das Fahrverhalten und wird das Fahren über kleine Hindernisse gefährlich.

Deshalb ist gemäß einer weiteren bevorzugten Ausführung der Erfindung, das zweite Rad zusätzlich um eine etwa in Fahrtrichtung verlaufende zweite Schwenkachse schwenkbar am flächigen Element anzuordnen und mit der Griffstütze über einen Mechanismus zu koppeln, der eine Schwenkbewegung der Griffstütze gegenüber dem flächigen Element um die erste Schwenkachse in eine Schwenkbewegung des zweiten Rades um die zweite Schwenkachse derart umwandelt, dass die zweite Drehachse des zweiten Rades in dem Ruhezustand einen größeren Winkel gegenüber dem flächigen Element als in dem Betriebszustand aufweist. Während des Verschwenkens der Griffstütze zum flächigen Element in den Ruhezustand sorgt dieser Mechanismus dafür, dass das zweite Rad, das um eine etwa in Fahrtrichtung verlaufende zweite Schwenkachse schwenkbar am flächigen Element angeordnet ist, um diese zweite Schwenkachse von einer Betriebsstellung in eine Ruhestellung verschwenkt wird. Dadurch ist in der Ruhestellung das zweite Rad sozusagen weggeschwenkt oder weggeklappt und steht somit nicht mehr störend vom flächigen Element hervor. Durch diese Konstruktion nimmt das fahrbare Gerät im Ruhezustand eine noch Platz sparendere Form als im Stand der Technik ein und wird somit die Platz sparende Wirkung des Ruhezustandes deutlich optimiert. Beim Ausklappen der Griffstütze und somit beim Verbringen des fahrbaren Gerätes vom Ruhezustand in den Betriebszustand sorgt der erfindungsgemäße Mechanismus dafür, dass die im Ruhezustand herrschende Schwenkstellung des zweiten Rades wieder rückgängig gemacht und das zweite Rad wieder in seine Fahrstellung im Betriebszustand zurückgeschwenkt wird und somit das fahrbare Gerät wieder seine Funktion des Fahrens erfüllen kann.

Bei einer Weiterbildung der zuvor angegebenen Ausführung ist zweckmäßigerweise die zweite Drehachse des zweiten Rades gegenüber dem flächigen Element in dem Ruhezustand in einem Winkel von etwa 90° und in dem Betriebszustand in einem Winkel von etwa 0° ausgerichtet, so dass das zweite Rad im Betriebszustand während des Fahrens etwa aufrecht steht und im Ruhezustand etwa in der Ebene des flächigen Elementes liegt und somit nicht störend hervorsteht.

Eine weitere bevorzugte Ausführung der Erfindung zeichnet sich dadurch aus, dass der Mechanismus eine Zug-Schub-Stange aufweist, die über ein vom Klappgelenk beabstandetes Gelenk an der Griffstütze angelenkt, entlang des flächigen Elementes geführt und mit einem am flächigen Element angeordneten Getriebe gekoppelt ist, welches eine Längsbewegung der Zug-Schub-Stange in die Schwenkbewegung des zweiten Rades um die zweite Schwenkachse umwandelt. Dadurch, dass das Gelenk und somit der Anlenkungspunkt für die Zug-Schub-Stange an der Griffstütze vom Klappgelenk beabstandet ist, findet während der Schwenkbewegung der Griffstütze um das Klappgelenk eine Veränderung des Abstandes jenes Anlenkungspunktes vom zweiten Rad statt, was zu der erwähnten Längsbewegung der Zug-Schub-Stange führt. Dabei ist das besagte Getriebe so ausgebildet, dass jene Längsbewegung der mit dem Getriebe gekoppelten Zug-Schub-Stange in eine Schwenkbewegung des zweiten Rades um die Schwenkachse umgewandelt wird.

Für eine möglichst wenig störende Anordnung der erwähnten Zug-Schub-Stange sollten das Gelenk an einer Stelle der Griffstütze, welche sich im Betriebszustand an oder unterhalb der Unterseite des flächigen Elementes befindet, und die Zug-Schub-Stange an der Unterseite des flächigen Elementes angeordnet sein.

Das erwähnte Getriebe kann bevorzugt so ausgeführt sein, dass es einen um die zweite Schwenkachse drehbar, jedoch in axialer Richtung im Wesentlichen ortsfest gelagerten, vorzugsweise hülsenförmigen, Rotationskörper aufweist, an dessen Mantel mindestens eine winklig zur zweiten Schwenkachse verlaufende Nut ausgebildet ist, in die ein an der Zug-Schub-Stange angeordnetes, stiftförmiges Nockenelement ragt. Die winklig zur zweiten Schwenkachse verlaufende Nut, in die das an der Zug-Schub-Stange angeordnete, stiftförmige Nockenelement ragt, sorgt dafür, dass die Längsbewegung der Zug-Schub-Stange in eine Drehbewegung des Rotationskörpers umgewandelt wird, was zu einer entsprechenden Schwenkbewegung des zweiten Rades um die zweite Schwenkachse führt.

Zweckmäßigerweise sollte das zweite Rad um die zweite Drehachse drehbar an einer Gabel gelagert sein, welche um die zweite Schwenkachse schwenkbar am flächigen Element angeordnet ist. In Verbindung mit der zuvor erwähnten Weiterbildung ist es von Vorteil, die Gabel und den Rotationskörper axial zueinander auszurichten und drehfest miteinander zu verbinden.

Zur Anpassung an die Personengröße des Benutzers einerseits und zum besseren Verstauen in der Ruhestellung andererseits sollte die Griffstütze mindestens zwei zueinander teleskopierbar angeordnete Elemente aufweisen.

Bevorzugt weist die Griffstütze Mittel zur, vorzugsweise mittigen und/oder symmetrischen, Befestigung eines Gepäckstückes an der Griffstütze auf, wie beispielsweise in der WO 2008/071 798 A1 vorgeschlagen wird.

Zur lösbaren Arretierung eines Gepäckstückes an einem Abschnitt des fahrbaren Gerätes, insbesondere einem Querbalken, werden bevorzugt hierfür geeignete Arretiermittel verwendet, die vorzugsweise Halteclips aufweisen können.

Zweckmäßigerweise dient das flächige Element als Trittbrett.

Bevorzugt sollten die Griffstütze und das flächige Element im Ruhezustand etwa parallel zueinander angeordnet sein und/oder im Wesentlichen nebeneinander liegen, was des weiteren zu einer besonders Platz sparenden Anordnung führt.

Nachfolgend wird ein bevorzugtes Ausführungsbeispiel der Erfindung anhand der beiliegenden Figuren näher erläutert. Es zeigen:
- Fig. 1: eine perspektivische Darstellung eines fahrbaren Gerätes gemäß einem ersten bevorzugten Ausführungsbeispiel mit Gepäckstück in einem Betriebszustand;
- Fig. 2: eine Seitenansicht des fahrbaren Gerätes von Fig. 1 im Betriebszustand;
- Fig. 3: eine perspektivische Darstellung des fahrbaren Gerätes von Fig. 1 in einem Zwischenzustand bei einer Überführung vom Betriebszustand gemäß den Figuren 1 und 2 in einen Ruhezustand;
- Fig. 4: eine perspektivische Darstellung des fahrbaren Gerätes von Fig. 1 im Ruhezustand;
- Fig. 5: eine Seitenansicht des fahrbaren Gerätes von Fig. 1 im Ruhezustand;
- Fig. 6: eine vergrößerte abschnittsweise Ansicht auf die Unterseite des hinteren Endabschnittes des Trittbrettes des fahrbaren Gerätes von Fig. 1 im Betriebszustand;
- Fig. 7: eine vergrößerte ausschnittsweise Ansicht auf die Unterseite des hinteren Endabschnittes des Trittbrettes des fahrbaren Gerätes von Fig. 1 im Ruhezustand;
- Fig. 8: eine vergrößerte ausschnittsweise Ansicht des Verbindungsbereiches zwischen dem Trittbrett und einem Querbalken des fahrbaren Gerätes von Fig. 1 im Ruhezustand;
- Fig. 9: eine perspektivische Darstellung eines fahrbaren Gerätes gemäß einem zweiten bevorzugten Ausführungsbeispiel bei abgenommenem Gepäckstück im Betriebszustand;
- Fig. 10: eine perspektivische Darstellung des fahrbaren Gerätes von Fig. 9 mit daran angebrachten Halteclips im Ruhezustand;
- Fig. 10a: eine vergrößerte ausschnittsweise Ansicht von Fig. 10 mit abgenommenen Halteclips;
- Fig. 11: eine perspektivische Darstellung des fahrbaren Gerätes von Fig. 9 mit in einer Lenkstellung eingeschlagenen Vorderrädern im Ruhezustand;
- Fig. 11a: eine vergrößerte ausschnittsweise Ansicht von Fig. 11;
- Fig. 12: eine perspektivische Darstellung des fahrbaren Gerätes von Fig. 9 mit in die Mittelstellung eingerasteter Lenkung im Ruhezustand; und
- Fig. 12a: eine vergrößerte ausschnittsweise Ansicht der Darstellung von Fig. 12.

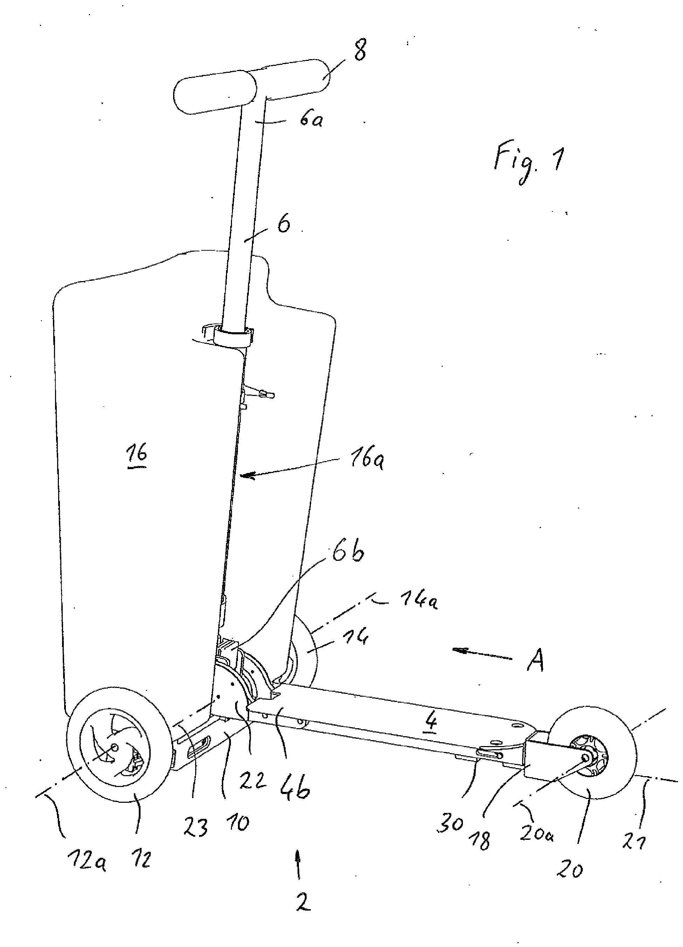

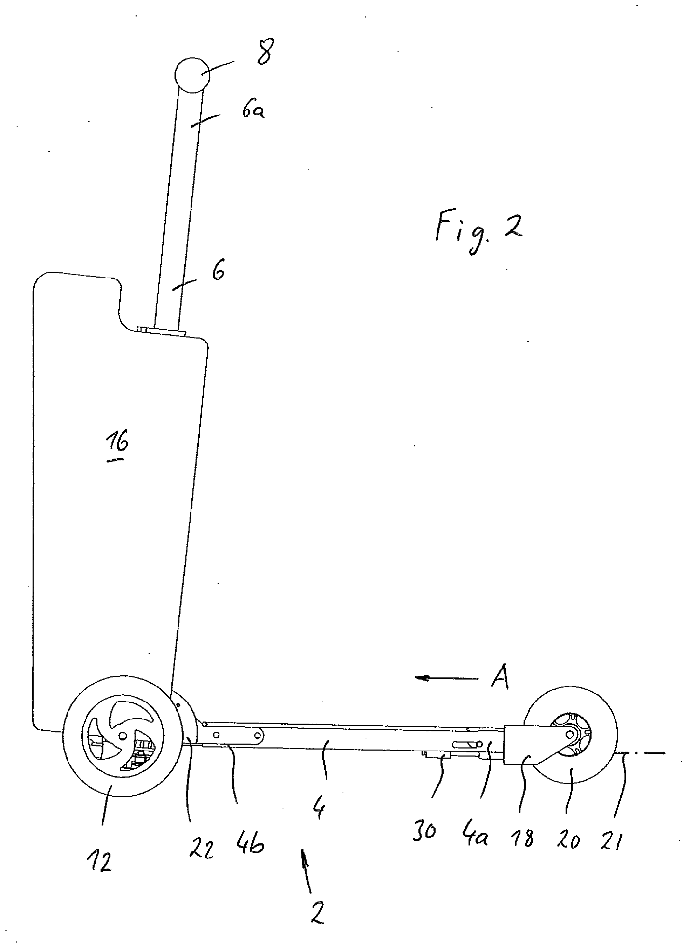

In den Figuren 1 bis 8 ist eine bevorzugte erste Ausführung eines fahrbaren Gerätes 2 gezeigt, das nach Art eines klappbaren Rollers mit einem Trittbrett 4 und einer Griffstütze 6 ausgebildet ist. In den Figuren 1 und 2 ist das fahrbare Gerät 2 in einem aufgeklappten Betriebszustand gezeigt, in dem die Griffstütze 6 in einem Winkel von etwas weniger als 90° gegenüber dem horizontal ausgerichteten Trittbrett 4 angeordnet ist. Somit steht im dargestellten Ausführungsbeispiel die Griffstütze 6 im Betriebszustand nahezu aufrecht, wobei ihr distales Ende 6a, das einen Griff 8 trägt, gleichzeitig das obere Ende bildet. Das proximale gegenüberliegende Ende 6b der Griffstütze 6 ist auf einem Querbalken 10 montiert, der im dargestellten Ausführungsbeispiel, in Fahrtrichtung gemäß Pfeil A betrachtet, vor dem Trittbrett 4 und unterhalb der vom Trittbrett 4 gebildeten Ebene angeordnet ist. Wie beispielsweise Fig. 1 erkennen lässt, ist an dem einen Ende des Querbalkens 10 ein erstes Vorderrad 12 um eine Drehachse 12a und am gegenüberliegenden anderen Ende des Querbalkens 10 ein zweites Vorderrad 14 um eine Drehachse 14a drehbar gelagert.

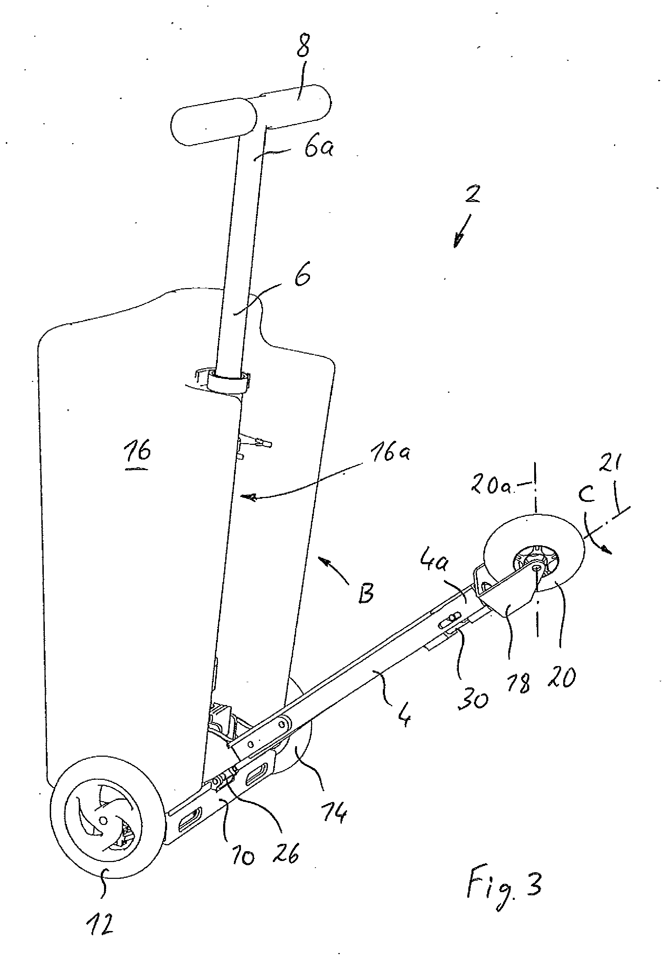

Im dargestellten Ausführungsbeispiel ist ferner ein Gepäckstück 16 an der Griffstütze 6 und auf dem Querbalken 10 befestigt. Somit übernimmt im dargestellten Ausführungsbeispiel das fahrbare Gerät 2 die Funktion eines fahrbaren Gepäckstückes oder Rollkoffers. Wie insbesondere die Figuren 1 und 3 ferner erkennen lassen, weist im dargestellten Ausführungsbeispiel das Gepäckstück 16 einen länglichen, nach innen gewölbten Abschnitt 16a auf, durch den sich an der Außenseite des Gepäckstückes 16 entlang die Griffstütze 6 erstreckt. Wie insbesondere Fig. 1 ferner erkennen lässt, ist die Länge des Querbalkens 10 auf die Breite des unteren Abschnittes des Gepäckstückes 16 entsprechend abgestimmt, so dass die Vorderräder 12, 14 außerhalb des Gepäckstückes 16 liegen. In diesem Zusammenhang sei jedoch darauf hingewiesen, dass die Verwendung und Montage eines Gepäckstückes nicht zwingend notwendig ist, sondern stattdessen auch andere Arten von Nutzlasten angeordnet werden können oder das dargestellte fahrbare Gerät 2 auch ohne jegliche Nutzlast verwendet werden kann.

Zum Lenken des fahrbaren Gerätes 2 kann ein entsprechender Lenkmechanismus vorgesehen sein, der in den Figuren 1 bis 8 nicht dargestellt ist. Hierzu dient dann die Griffstütze 6 als Lenkstange, die durch entsprechendes Verschwenken des Griffes 8 um ihre Längsachse in Lenkrichtung verdrehbar ist. Ferner sind in diesem Fall die beiden Vorderräder 12, 14 um eine in den Figuren nicht dargestellte Schwenkachse verschwenkbar, die die Lenkachse bildet und gewöhnlich etwa in einem rechten Winkel oder in einem nahezu rechten Winkel gegenüber der jeweiligen Drehachse 12a bzw. 14a gerichtet ist und im Betriebszustand im Wesentlichen etwa aufrecht steht. Der nicht dargestellte Lenkmechanismus wandelt die Drehbewegung der Griffstütze 6 um deren Längsachse in eine simultane Lenkbewegung der beiden Vorderräder 12, 14 um die zuvor erwähnten Schwenkachsen um. In diesem Zusammenhang sei noch angemerkt, dass die beiden Vorderräder 12, 14 und somit deren Drehachsen 12a, 14a im Wesentlichen stets etwa parallel zueinander ausgerichtet sind und im Falle des Geradeauslaufs die beiden Drehachsen 12a, 14a im Wesentlichen miteinander fluchten.

Wie die Figuren ferner erkennen lassen, ist am hinteren bzw. distalen Ende 4a des Trittbrettes 4 eine Gabel 18 angeordnet, an der zwischen deren Schenkeln ein Hinterrad 20 um eine Drehachse 20a drehbar gelagert ist. Grundsätzlich ist es auch denkbar, mehr als ein Hinterrad vorzusehen, die beispielsweise hintereinander oder nebeneinander angeordnet sind. Somit bildet die Gabel 18 ein Lager für das Hinterrad 20 am Trittbrett 4. Zwar ist die Gabel 18 ortsfest am hinteren Ende 4a des Trittbrettes 4 angeordnet, jedoch an diesem um eine Schwenkachse 21 verschwenkbar gelagert, welche etwa in Längsrichtung des Trittbrettes 4 und etwa parallel zu einer vom Trittbrett 4 aufgespannten virtuellen Ebene und somit in dem in den Figuren 1 und 2 gezeigten Betriebszustand auch etwa in Fahrtrichtung gemäß Pfeil A verläuft. Somit erstreckt sich die Drehachse 20a des Hinterrades 20 etwa rechtwinklig zur Schwenkachse 21. Dies bedeutet, dass bei Verdrehen der Gabel 18 um die Schwenkachse 21 die Drehachse 20a des Hinterrades 20 und somit das Hinterrad 20 selbst eine Schwenkbewegung um die Schwenkachse 21 ausführt. Im Betriebszustand gemäß den Figuren 1 und 2, in dem sich das fahrbare Gerät 2 in seinem fahrbereiten Zustand befindet, nimmt die Gabel 18 eine solche Schwenkstellung ein, dass das Hinterrad 20 etwa aufrecht steht und somit dessen Drehachse 20a etwa horizontal verläuft.

Wie bereits zuvor erwähnt, ist das fahrbare Gerät 2 nach Art eines klappbaren Rollers ausgebildet, indem das Trittbrett 4 und die Griffstütze 6 in eine Platz sparende Ruhestellung für einen einfacheren Transport oder eine Platz sparende Aufbewahrung zusammengeklappt werden können. Hierzu ist am vorderen bzw. distalen Ende 4b des Trittbrettes 4 ein gabelförmiges Gelenkstück 22 befestigt, welches oberhalb des Querbalkens 10 am benachbarten bzw. proximalen Ende 6b der Griffstütze 6 um eine Schwenkachse 23 schwenkbar befestigt ist, die insbesondere in Fig. 1 sowie in Fig. 3, die einen Zwischenzustand zwischen dem in den Figuren 1 und 2 gezeigten Betriebszustand und einen zusammengeklappten Ruhezustand abbildet, schematisch gezeigt ist. Wie die schematische Darstellung der Schwenkachse 23 in Fig. 3 ferner erkennen lässt, verläuft die Schwenkachse 23 etwa parallel zu den Drehachsen 12a, 14a der beiden Vorderräder 12, 14 (Fig. 1), wenn diese in Geradeausrichtung stehen, und auch etwa parallel zum Querbalken 10 sowie ferner parallel zu einer vom Trittbrett 4 aufgespannten virtuellen Ebene und ist außerdem im Betriebszustand gemäß den Figuren 1 und 2 etwa horizontal ausgerichtet. Somit bilden das Gelenkstück 22 und das proximale Ende 6b der Griffstütze 6 gemeinsam ein Klappgelenk mit der erwähnten Schwenkachse 23. In diesem Zusammenhang sei noch angemerkt, dass eine in den Figuren nicht dargestellte Arretiereinrichtung vorgesehen ist, um in dem in den Figuren 1 und 2 gezeigten Betriebszustand die Griffstütze 6 gegenüber dem Trittbrett 4 zu arretieren und dadurch ein versehentliches Zusammenklappen zu verhindern.

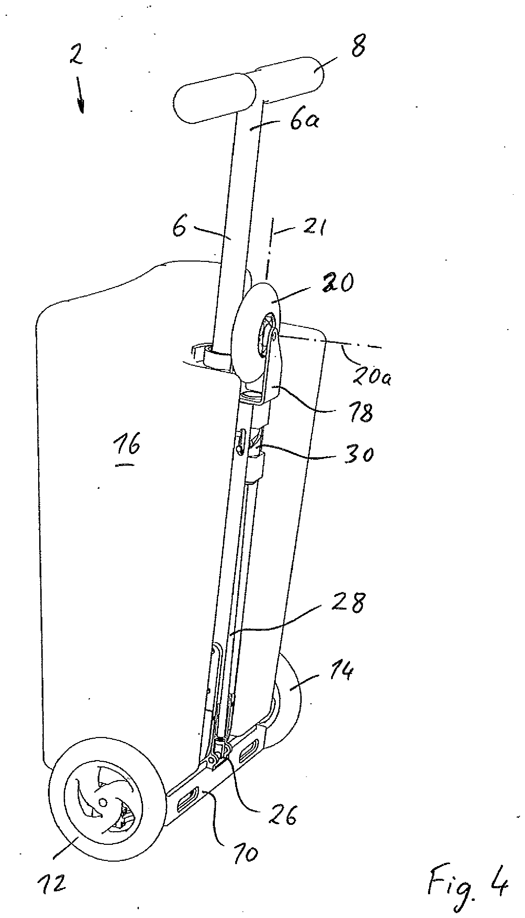

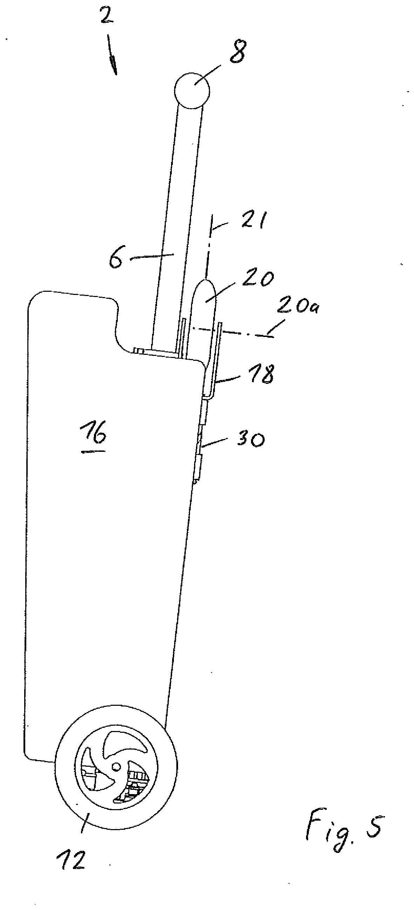

Um das fahrbare Gerät 2 vom Betriebszustand gemäß den Figuren 1 und 2 in einen Ruhezustand zu verbringen, wird das Trittbrett 4 nach Lösen einer eventuell vorhandenen Arretierungseinrichtung um die Schwenkachse 23 in Richtung des in Fig. 3 gezeigten Pfeils B und somit in Richtung auf die Griffstütze 6 verschwenkt, bis das Trittbrett 4 und die Griffstütze 6 zusammengeklappt sind. In dieser Stellung befindet sich das fahrbare Gerät 2 in einem Ruhezustand, wie in den Figuren 4 und 5 gezeigt ist. Während also im Betriebszustand gemäß den Figuren 1 und 2 das hintere Ende 4a des Trittbrettes 4 einen maximalen Abstand von der Griffstütze 6 einnimmt, ist dieser Abstand im Ruhezustand gemäß den Figuren 4 und 5 auf ein Minimum reduziert. Im dargestellten Ausführungsbeispiel liegen das Trittbrett 4 und die Griffstütze 6 im Ruhezustand gemäß den Figuren 4 und 5 im Wesentlichen parallel nebeneinander. Der längliche, am Gepäckstück 16 nach innen gewölbte Abschnitt 16a besitzt eine solche Breite, dass er das hochgeklappte Trittbrett 4 im Ruhezustand im Wesentlichen vollständig aufnimmt, wie Fig. 5 erkennen lässt. Eine solche Anordnung hat den Vorteil, dass im Ruhezustand das Trittbrett 4 am Gepäckstück 16 versenkt angeordnet ist und somit im Wesentlichen bündig mit der benachbarten Seitenfläche des Gepäckstückes 16 abschließt und nicht von dieser störend hervorsteht. Um bei Bedarf auch die Griffstütze 6 in eine platzsparende Stellung zu bringen, kann diese aus mindestens zwei zueinander teleskopierbar angeordneten Abschnitten bestehen, welche im Ruhezustand zur Verkürzung der Griffstütze 6 ineinander geschoben werden können, bis der Griff 8 auf der Oberseite des Gepäckstückes 16 aufliegt; in den Figuren ist die Teleskopierbarkeit der Griffstütze 6 allerdings nicht dargestellt.

Wie ein Vergleich des in Figuren 4 und 5 gezeigten Ruhezustandes mit dem in den Figuren 1 und 2 gezeigten Betriebszustand in Verbindung mit dem in Fig. 3 gezeigten Zwischenzustand erkennen lässt, wird beim Verschwenken des Trittbrettes 4 in Richtung des Pfeils B gemäß Fig. 3 vom Betriebszustand gemäß den Figuren 1 und 2 in den Ruhezustand gemäß den Figuren 4 und 5 die Gabel 18 einer Schwenkbewegung um die Schwenkachse 21 in Richtung des Pfeils C gemäß Fig. 3 unterworfen. Durch die Klapp- bzw. Schwenkbewegung in Richtung des Pfeils B gemäß Fig. 3 wird dadurch das Hinterrad 20 von einer gegenüber dem Trittbrett 4 im Wesentlichen aufrechten Stellung im Betriebszustand durch eine Schwenkbewegung um etwa 90° in eine sog. Quer-Position im Ruhezustand verbracht, in der es nun etwa in einer vom Trittbrett 4 aufgespannten virtuellen Ebene liegt. Dadurch befindet sich das Hinterrad 20 im Ruhezustand in einer Platz sparenden Anordnung, da es zum Trittbrett 4 eine Art Verlängerung bildet und nicht mehr quer von diesem hervorsteht. Diese Platz sparende Positionierung des Hinterrades 20 in der Ruhestellung ist insbesondere in Fig. 5 gut erkennbar.

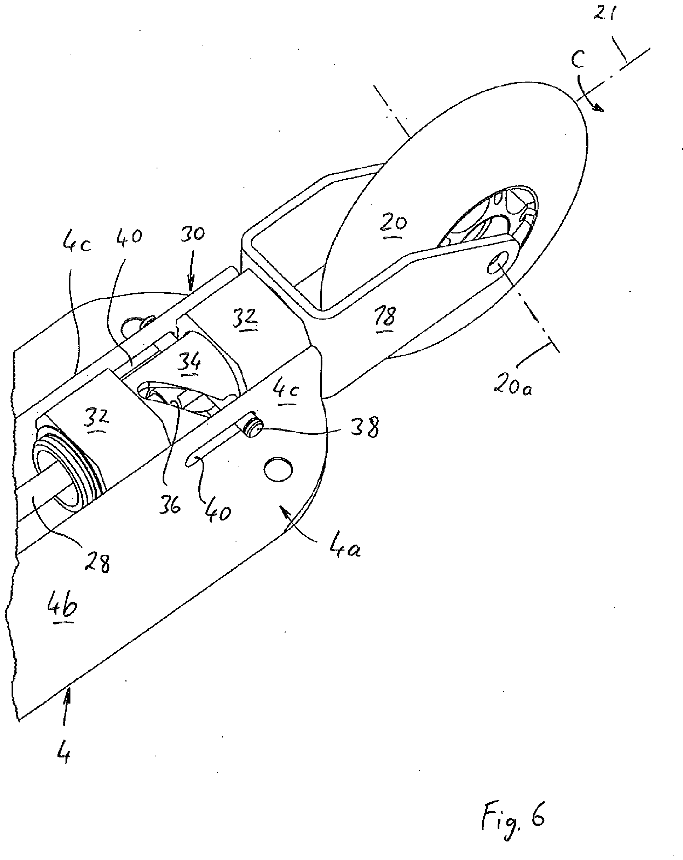

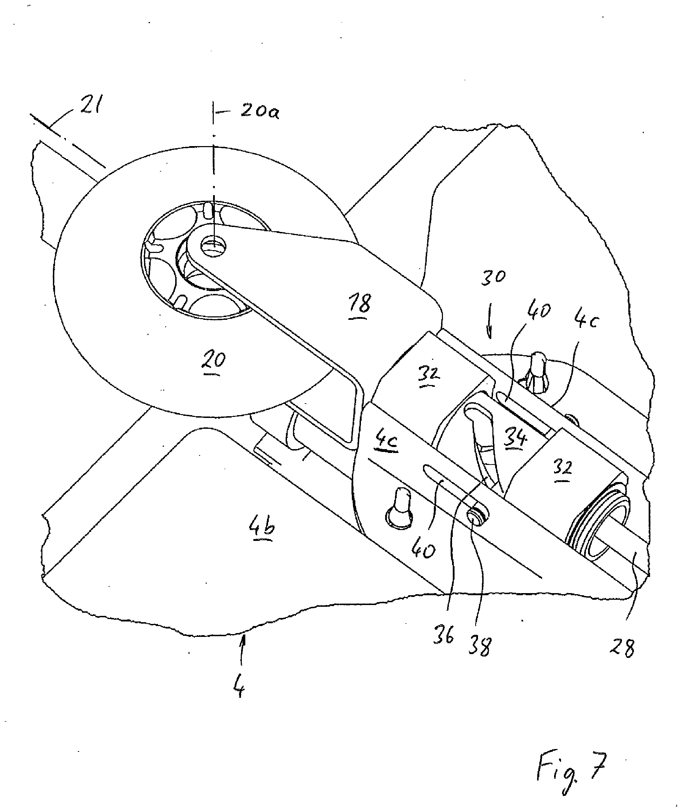

Damit während der beschriebenen Schwenkbewegung in Richtung des Pfeils B gemäß Fig. 3 automatisch die um die Schwenkachse 21 schwenkbar am hinteren Ende 4a des Trittbrettes 4 gelagerte Gabel 18 der zuvor beschriebenen Schwenkbewegung in Richtung des Pfeils B gemäß Fig. 3 unterworfen wird, ist erfindungsgemäß eine besondere Mechanik vorgesehen, die die Schwenkbewegung in Richtung des Pfeils B in eine Schwenkbewegung des Hinterrades 20 in Richtung des Pfeils C umwandelt. Wie insbesondere die Figuren 3 und 4 erkennen lassen, ist an einem am Querträger 10 unterhalb des Trittbrettes 4 ausgebildeten zusätzlichen Gelenk 26 eine Zug-Schub-Stange 28 angelenkt, die an der Unterseite 4b des Trittbrettes 4 geführt und mit ihrem hinteren bzw. distalen Ende mit einem Getriebe 30 gekoppelt ist. Das Getriebe 30 ist im dargestellten Ausführungsbeispiel an der Unterseite 4b des hinteren Endes 4a des Trittbrettes 4 angeordnet, wie die Figuren 6 und 7 erkennen lassen. Dieses Getriebe 20 wandelt eine längsaxiale Bewegung der Zug-Schub-Stange 28 in eine Drehbewegung der Gabel 18 um die Schwenkachse 21 um.

Wie die Figuren 6 und 7 erkennen lassen, weist das Getriebe 30 zwei voneinander axial beabstandete Lager 32 und eine Drehhülse 34 auf, die zwischen den Lagern 32 liegt und an diesen um die Schwenkachse 21 drehbar, jedoch in axialer Richtung ortsfest gelagert ist. Im Mantel der drehbar gelagerten Drehhülse 34 sind zwei gegenüberliegende und gegenüber der Schwenkachse 21 winklig bzw. geneigt verlaufende schlitzförmige Nuten 36 ausgebildet, durch die sich ein Querstift 38 erstreckt. Der Querstift 38 ist rechtwinklig zur Schwenkachse 21 angeordnet und mit seinen Enden nicht nur durch die beiden erwähnten schlitzförmigen Nuten 36 im Mantel der Drehhülse 34, sondern auch durch benachbarte Längsschlitze 40 gesteckt, die etwa in Längsrichtung des Trittbrettes 4 und parallel zur Zug-Schub-Stange 28 verlaufen und in von der unteren Seite 4b des Trittbrettes 4 vorspringenden Abschnitten 4c ausgebildet sind. Diese beiden vorspringenden Abschnitte 4c haben eine sich in Längsrichtung des Trittbrettes 4 erstreckende längliche Form und sind voneinander beabstandet, um zwischen sich eine Kammer zur Aufnahme der Lager 32 und der Drehhülse 34 zu bilden. Das hintere bzw. distale Ende der Zug-Schub-Stange 28 ist lose durch das näher liegende Lager 32 in die Drehhülse 34 geführt und dort mit dem Querstift 38 starr gekoppelt.

Eine Bewegung der Zug-Schub-Stange 28 in Richtung deren Längsachse hat somit eine Bewegung des Querstiftes 38 in Richtung quer zu dessen Längsachse zur Folge, wodurch sich der Querstift 38 entlang der Längsschlitze 40 bewegt, in denen der Querstift 38 somit geführt wird. Gleichzeitig findet auch eine Zwangsführung des Querstiftes 38 entlang der Nuten 36 in der Drehhülse 34 statt. Da die Drehhülse 34 drehbar, jedoch in axialer Richtung ortsfest gelagert ist und die schlitzförmigen Nuten 36 winklig angeordnet sind, bewirkt die Zwangsführung des Querstiftes 38 entlang der Nuten 36 eine Rotationsbewegung der Drehhülse 34. Somit wird eine längsaxiale Bewegung der Zug-Schub-Stange 28 in eine rotatorische Bewegung der Drehhülse 34 um die Schwenkachse 21 umgewandelt. Da die Gabel 18 mit der Drehhülse 34 drehfest verbunden ist, führt die Drehbewegung der Drehhülse 34 zu einer entsprechenden Drehbewegung der Gabel 18 und somit des Hinterrades 20 um die Schwenkachse 21 in Richtung des Pfeils C. Während in Fig. 6 das Hinterrad 20 im Betriebszustand und somit in seiner Fahrstellung gezeigt ist, befindet sich das Hinterrad 20 gemäß der Darstellung von Fig. 7 in seiner zuvor erwähnten Quer-Position im Ruhezustand des fahrbaren Gerätes 2.

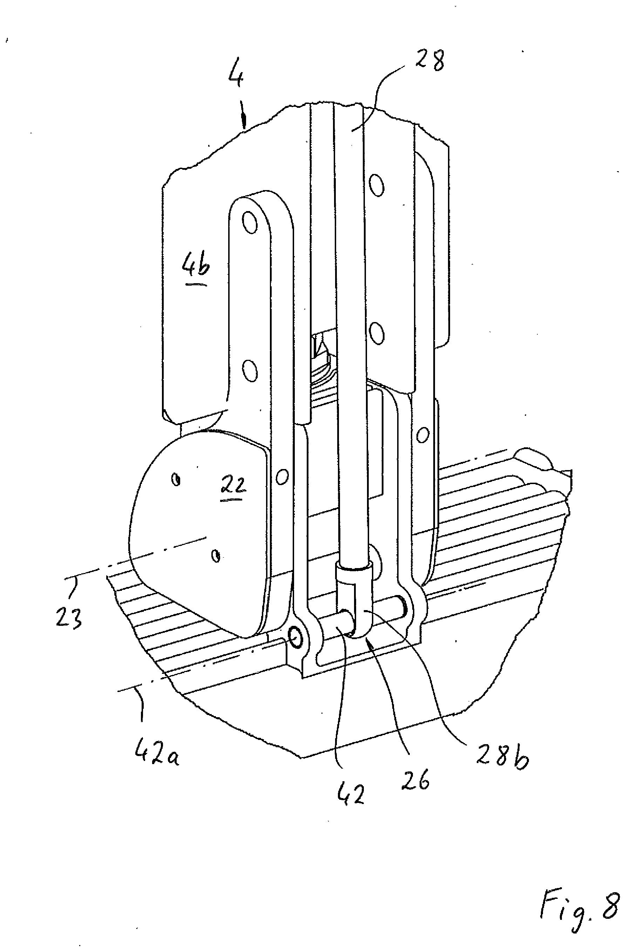

In Fig. 8 ist die Anlenkung der Zug-Schub-Stange mit ihrem proximalen Ende 28b am Querbalken 10 dargestellt. Hierzu ist ein Gelenkstift 42 vorgesehen, über den das proximale Ende 28b der Zug-Schub-Stange 28 am Querbalken 10 um eine Gelenkachse 42a schwenkbar gelagert ist. Somit wird das Gelenk 26 für die Anlenkung der Zug-Schub-Stange 28 am Querbalken 10 im wesentlichen durch das proximale Ende 28b der Zug-Schub-Stange 28 und den Gelenkstift 42 gebildet. Da die Schwenkachse 23, um die das Trittbrett 4 gegenüber der Griffstütze 6 geklappt bzw. verschwenkt wird, in einem Abstand von der Gelenkachse 42a verläuft, wie Fig. 8 erkennen lässt, führt eine Schwenkbewegung des Trittbrettes 4 gegenüber der Griffstütze 6 zu einer axialen Längsbewegung der Zug-Schub-Stange 28 gegenüber dem Trittbrett 4, woraus dann die zuvor beschriebene Drehbewegung der Drehhülse 34 des Getriebes 30 resultiert.

Ergänzend sei noch angemerkt, dass aufgrund der zuvor beschriebenen Anordnung nicht nur eine Klapp- bzw. Schwenkbewegung des Trittbrettes 4 in Richtung des Pfeils B (Fig. 3) und somit in Richtung auf die Griffstütze 6 zu einer Schwenkbewegung des Hinterrades 20 von seiner aufrechten Stellung in seine Quer-Position führt, sondern dass jene Bewegungsabläufe auch in umgekehrter Richtung möglich sind, also bei Bewegung des Trittbrettes 4 von dem Ruhezustand in den Betriebszustand und somit beim Aufklappen von Trittbrett 4 und Griffstütze 6 das Hinterrad 20 von seiner Quer-Position gemäß Fig. 7 wieder in seine aufrechte Stellung gemäß den Figuren 1, 2 und 6 gedreht wird.

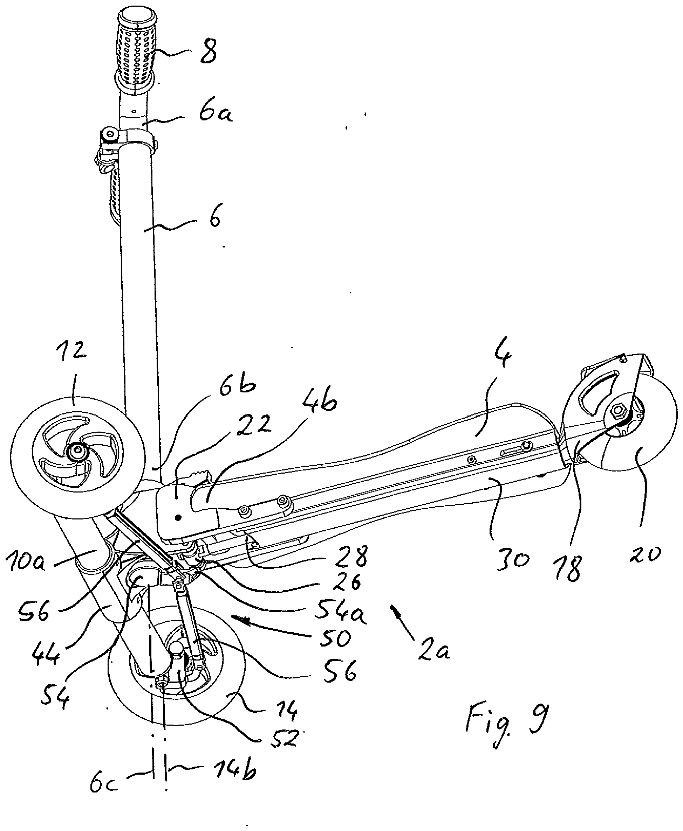

In den Figuren 9 bis 12a ist ein fahrbares Gerät 2a gemäß einer bevorzugten zweiten Ausführung gezeigt. Sofern diese zweite Ausführung Komponenten aufweist, die den entsprechenden Komponenten der ersten Ausführung gemäß den Figuren 1 bis 8 gleichen oder zumindest mit diesen hinsichtlich ihrer Funktion vergleichbar sind, werden für die zweite Ausführung die gleichen Bezugszeichen wie für die erste Ausführung verwendet, wobei hinsichtlich dieser übereinstimmenden Komponenten zur Vermeidung von Wiederholungen auf die entsprechenden Teile der Beschreibung der ersten Ausführung verwiesen wird.

Ein erkennbarer Unterschied der zweiten Ausführung gegenüber der ersten Ausführung besteht darin, dass der das proximale Ende 6b der Griffstütze 6 tragende und die beiden Vorderräder 12, 14 drehbar lagernde Querbalken 10a einen runden Querschnitt besitzt und somit als Rundrohr ausgebildet ist.

Ferner lässt Fig. 9 ein Lagerteil 44 erkennen, an dem der Querbalken 10a befestigt ist, mit ihrem proximalen Ende 6b die Griffstütze 6 angeordnet, welche vom Lagerteil 44 emporragt, und das Gelenkstück 22 schwenkbar befestigt ist, welches am vorderen bzw. distalen Ende 4b des Trittbrettes 4 ist.

Zwar ist das fahrbare Gerät 2a gemäß der zweiten Ausführung in den Figuren 9 bis 12a ohne ein Gepäckstück dargestellt, jedoch wie die erste Ausführung zur Aufnahme eines Gepäckstückes oder einer sonstigen Nutzlast vorgesehen, so dass auch das fahrbare Gerät 2a gemäß der zweiten Ausführung die Funktion eines fahrbaren Gepäckstückes oder Rollkoffers übernimmt.

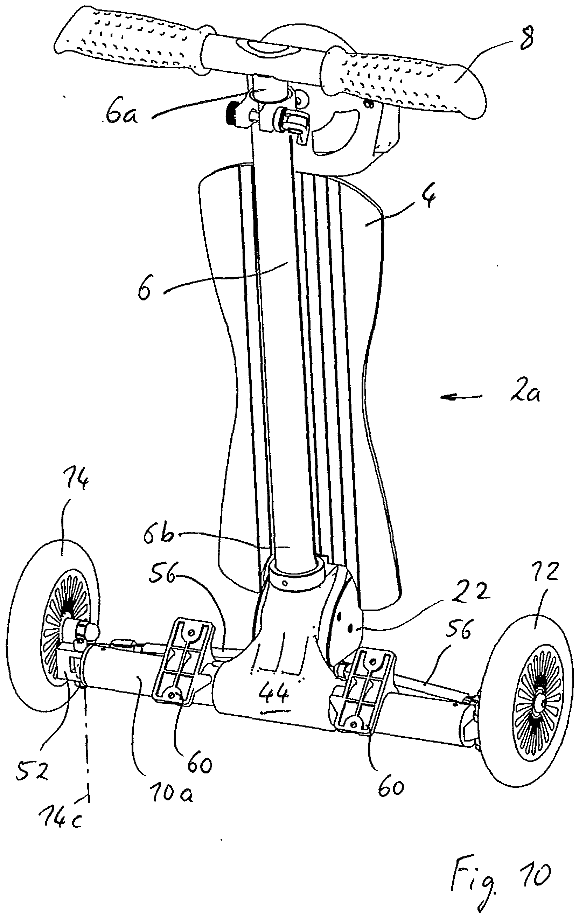

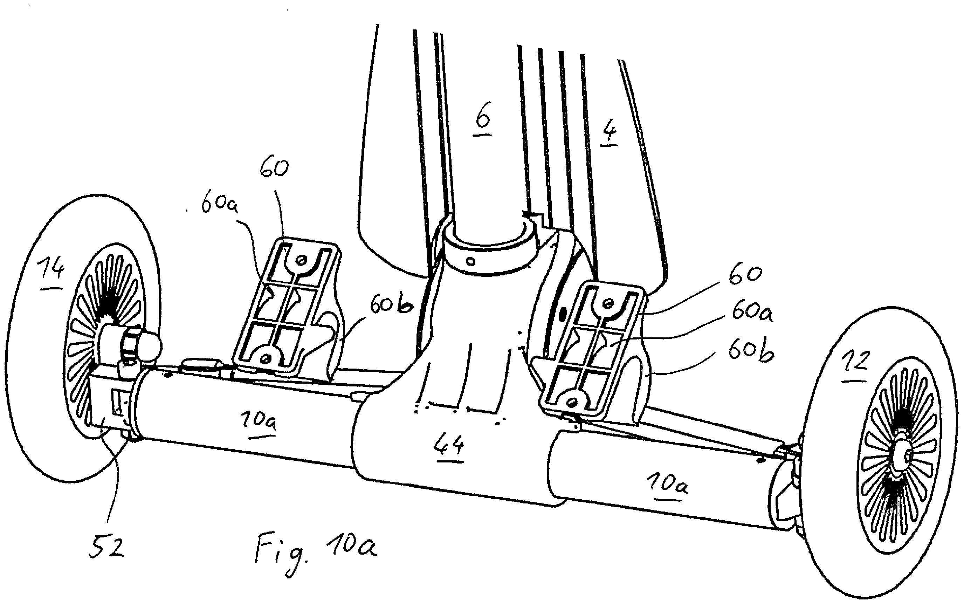

Zur Befestigung eines Gepäckstückes auf dem rohrförmigen Querbalken 10a werden für die zweite Ausführung Halteclips 60 verwendet, wie in den Figuren 10 und 10a gezeigt ist. Im dargestellten Ausführungsbeispiel weisen die Halteclips 60 einen plattenförmigen Grundkörper 60a auf, der mit seiner dem Betrachter von Fig. 10a zugewandten Seite an einem nicht dargestellten Gepäckstück und insbesondere an dessen Unterseite befestigt ist. Wie Fig. 10a ferner erkennen lässt, sind an der gegenüberliegenden Seite der plattenförmigen Grundkörper 60a bügel- bzw. hakenförmige Arretierabschnitte 60b ausgebildet, die im montierten Zustand den Querbalken 10a umgreifen, wodurch die Halteclips 60 gemäß der Abbildung von Fig. 10 am Querbalken 10a lösbar arretiert sind. Die Halteclips 60 bestehen bevorzugt aus Kunststoff und sind die bügel- bzw. hakenförmig gebogenen Eingriffsabschnitte 60b für die lösbare Arretierung am plattenförmigen Grundkörper 60a elastisch angeordnet.

Im Gegensatz zur ersten Ausführung gemäß den Figuren 1 bis 8 ist in den Figuren 9 bis 12a, das fahrbare Gerät 2a gemäß zweitem Ausführungsbeispiel, sofern erkennbar, mit einem Lenkmechanismus 50 dargestellt. Hierzu sind die beiden Vorderräder 12, 14 jeweils um eine Schwenkachse verschwenkbar, die die Lenkachse bildet und gewöhnlich etwa in einem rechten Winkel oder in einem nahezu rechten Winkel gegenüber der Drehachse der Vorderräder 12, 14 (vgl. hierzu die Drehachsen 12a, 14a in Fig. 1) gerichtet ist und im Betriebszustand im Wesentlichen etwa aufrecht steht, wie in Fig. 9 die dem Vorderrad 14 zugeordnete Schwenkachse 14b erkennen lässt. An den beiden äußeren Enden des Querbalkens 10a ist somit jeweils ein Achslager 52 um die erwähnte Schwenkachse schwenkbar gelagert, und an den Achslagern 52 sind die Vorderräder 12, 14 drehbar gelagert. Wie bei der ersten Ausführung dient auch hier die Griffstütze 6 als Lenkstange, die durch entsprechendes Verschwenken des Griffes 8 um ihre Mittel- bzw. Längsachse 6c in Lenkrichtung verdrehbar ist. Hierzu ist die Griffstütze 6 mit ihrem proximalen Ende 6b im Lagerteil 44 entsprechend drehbar gelagert und mit einem Drehhebel 54 versehen, der im dargestellten Ausführungsbeispiel an der Unterseite des Lagerteils 44 angeordnet ist. Wie Fig. 9 ferner erkennen lässt, sind am freien Ende 54a des Drehhebels 54 Lenkstangen 56 angelenkt, die mit ihrem gegenüberliegenden Ende an den schwenkbaren Achslagern 52 der Vorderräder 12, 14 angelenkt sind. Somit bewirkt eine Drehung der Griffstütze 6 eine Bewegung der Lenkstangen 56 etwa in Richtung ihrer Längserstreckung, wodurch das Achslager 52 des einen Vorderrades 12 bzw. 14 auf Druck und das Achslager 52 des anderen Vorderrades 14 bzw. 12 auf Zug beansprucht wird. Dies hat zur Folge, dass die Achslager 52 beider Vorderräder gleichzeitig in dieselbe Richtung verschwenkt werden. Auf diese Weise wandelt der Lenkmechanismus 50 eine Drehbewegung der Griffstütze 6 um deren Längsachse 6c in eine simultane Lenkbewegung der beiden Vorderräder 12, 14 um.

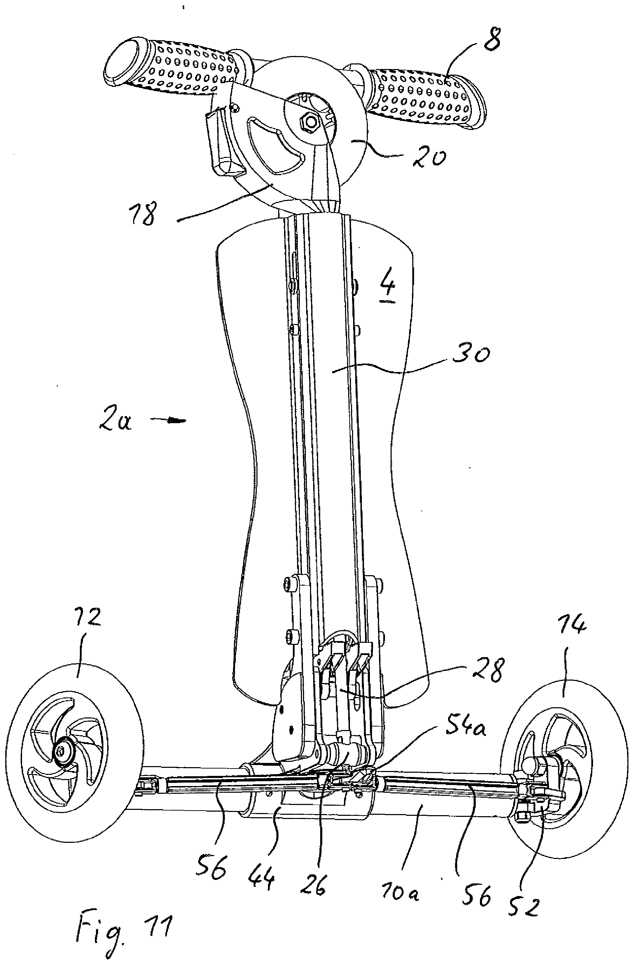

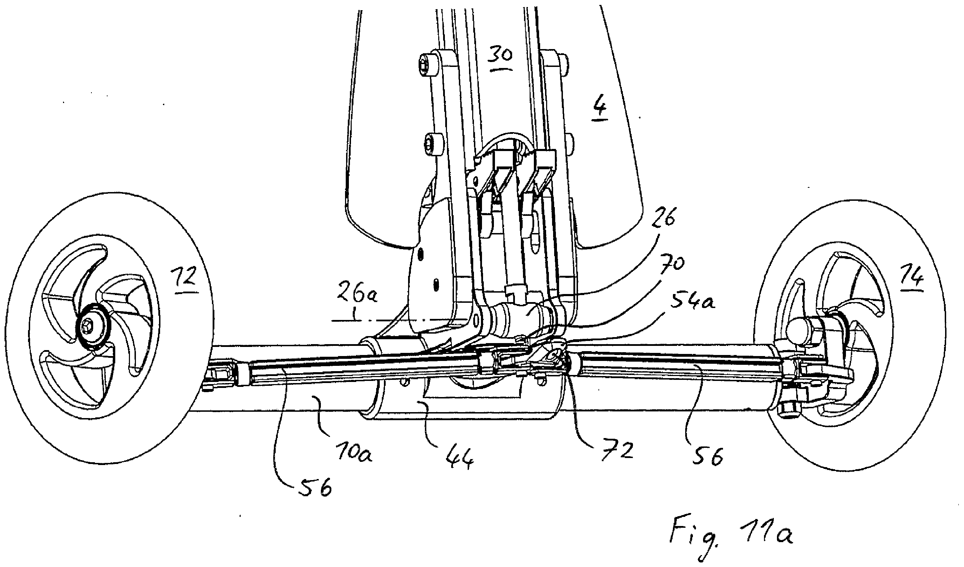

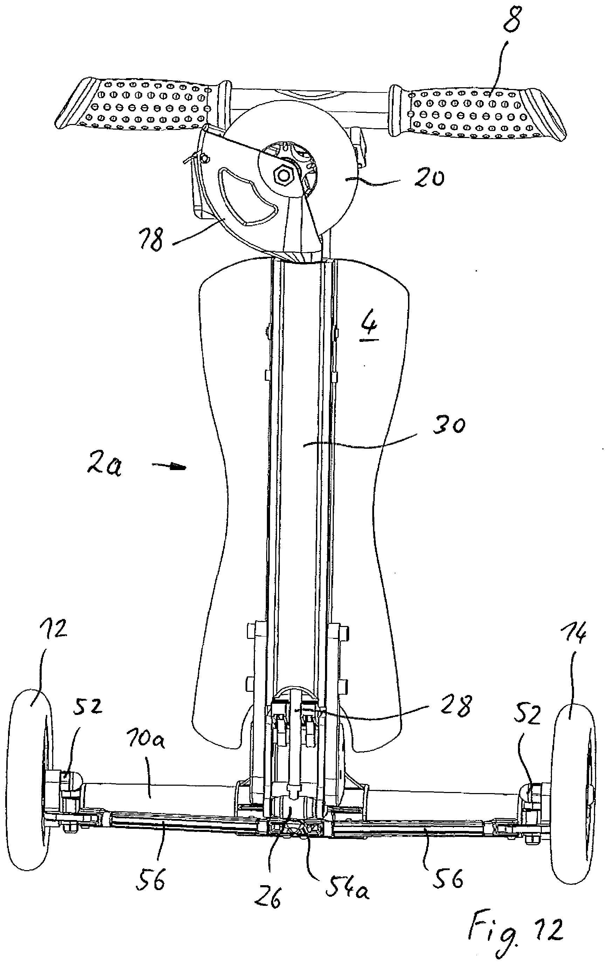

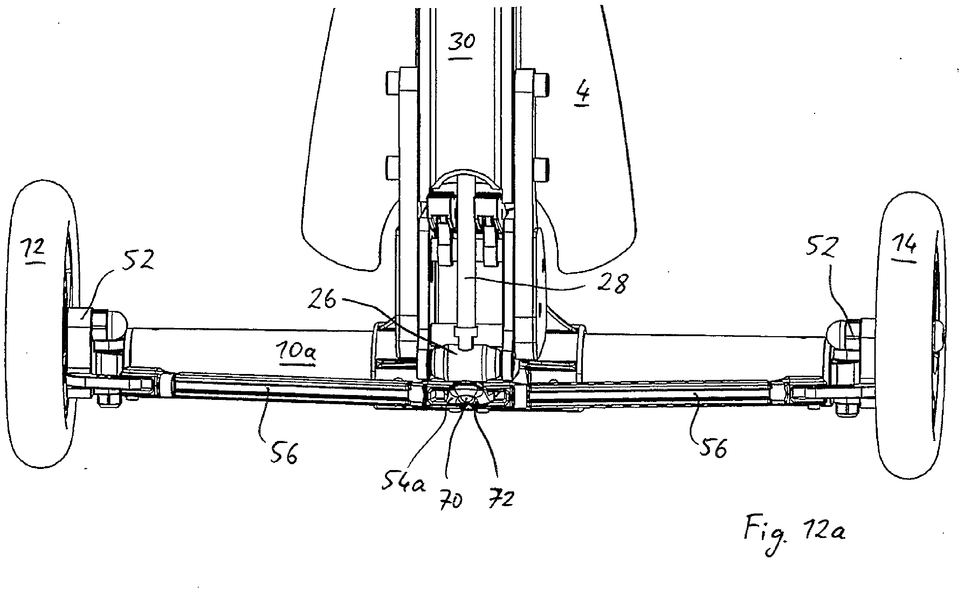

Wie insbesondere Fig. 11a erkennen lässt, ist am Gelenk 26, das am gabelförmigen Gelenkstück 22 um eine etwa parallel zum Querbalken 10a verlaufende Drehachse 26a drehbar gelagert ist und an dem die Zug-Schub-Stange 28 angelenkt ist, ein radialer Zapfen 70 und passend für diesen radialen Zapfen 70 im freien Ende 54a des Drehhebels 54 eine entsprechende Aussparung 72 ausgebildet. Dabei sind die Anordnung und Ausrichtung des Drehhebels 54 und der Aussparung 72 in dessen freiem Ende 54a sowie des Zapfens 70 am Gelenk 26 so getroffen, dass im Ruhezustand die Aussparung 72 im freien Ende 54a des Drehhebels 54 den am Gelenk 26 ausgebildeten radialen Stift 70 aufnimmt und somit der Stift 70 in die Aussparung 72 einrastet, wenn die Griffstütze 6 in eine solche Lenkstellung gedreht wird, in der sich die Vorderräder 12, 14 in ihrer Geradeausstellung befinden, wie in den Figuren 12 und 12a gezeigt ist.

Demnach bilden der radiale Stift 70 am Gelenk 26 und die Aussparung 72 im freien Ende 54a des Drehhebels 54 gemeinsam eine Arretiereinrichtung zur Arretierung des Lenkmechanismus 50 und somit der Vorderräder 12, 14 in die neutrale Mittelstellung für Geradeauslauf. Dabei wird die Arretierung nur dann wirksam, wenn sich das fahrbare Gerät 2a in seinem Ruhezustand gemäß den Figuren 10 bis 12a befindet, in der das Trittbrett 4 in Richtung auf die Griffstütze 6 geklappt ist. Denn die Überführung vom Betriebszustand in den Ruhezustand durch Verschwenken des Trittbrettes 4 in Richtung auf die Griffstütze 6 hat zur Folge, dass auch das Gelenk 26 einer entsprechenden Drehbewegung unterworfen wird. Erst aufgrund dieser Drehbewegung gelangt der Stift 70 in den Bereich des Drehhebels 54 und somit in 'Flucht' mit dessen freiem Ende 54a und der darin ausgebildeten Aussparung 72, um dann in diese einzurasten, wie ein Vergleich der Figuren 11 und 11a mit den Figuren 12 und 12a erkennen lässt. Wird dagegen das fahrbare Gerät 2a in seinen Betriebszustand gemäß Fig. 9 überführt, so wird das Gelenk 26 einer Schwenkbewegung unterworfen, die den Stift 70 aus dem Bereich des Drehhebels 54 herausführt, wodurch ein Einrasten des Stiftes 70 in die Aussparung 72 nicht stattfinden kann. Letzteres muss ohnehin im Betriebszustand vermieden werden, da ansonsten die Lenkung unbeabsichtigt stillgelegt würde. Dies macht jedoch im normalen Betrieb keinen Sinn und ist deshalb unerwünscht. Demgegenüber ist im Ruhezustand des Trittbrettes 4 eine Arretierung der Lenkung von Vorteil, um eine Vergrößerung der effektiven Breite durch Einschlagen der Vorderräder insbesondere in eine der beiden Endstellungen zu verhindern, was ansonsten einen erhöhten Platzbedarf im Ruhezustand zur Folge hätte. Ein weiterer Vorteil der Arretierungsmöglichkeit für die Lenkung besteht darin, dass im Ruhezustand das fahrbare Gerät 2a mit daran befestigtem Gepäckstück nach Art eines Trolleys verwendet und somit vom Benutzer hinter sich hergezogen werden kann.

Abschließend sei noch darauf hingewiesen, dass unter "Ruhezustand" grundsätzlich nicht ein unbenutzter Zustand für das fahrbare Gerät zu verstehen ist, sondern sich die Angabe "Ruhezustand" auf eine Situation bezieht, in der das Trittbrett 4 in eine Ruhestellung an die Griffstütze 6 geklappt ist und sich dadurch tatsächlich im unbenutzten Zustand befindet. Somit lässt sich im Ruhezustand das fahrbare Gerät zwar nicht als Roller benutzen; demgegenüber ist es aber ohne Weiteres möglich, das fahrbare Gerät im Ruhezustand beispielsweise als Trolley zu benutzen.

## Patentansprüche

1. Fahrbares Gerät, mit
einem flächigen Element (4),
mindestens einem um eine erste Drehachse (12a) rotierend gelagerten ersten Rad (12),
einer Griffstütze (6), die ein vom flächigen Element (4) distales Ende (6a), das einen Griff (8) trägt, und ein zum flächigen Element (4) proximales Ende (6b) aufweist,
einem benachbart zum ersten Rad (12) befindlichen Klappgelenk, das das proximale Ende (6b) der Griffstütze (6) mit dem flächigen Element (4) derart um eine erste Schwenkachse (23) schwenkbar verbindet, dass in einem Betriebszustand die Griffstütze (6) gegenüber dem flächigen Element (4) in einem, vorzugsweise etwa rechten oder nahezu rechten, Winkel ausgerichtet ist und somit das distale Ende (6a) der Griffstütze (6) einen maximalen Abstand zum flächigen Element (4) aufweist und in einem Ruhezustand das distale Ende (6a) der Griffstütze (6) einen minimalen Abstand vom flächigen Element (4) aufweist,
mindestens einem um eine zweite Drehachse (20a) rotierend gelagerten zweiten Rad (20), das an einem von der Anordnung aus erstem Rad und Klappgelenk beabstandeten entfernten Ende des flächigen Elementes (4) angeordnet ist,
wobei das erste Rad (12) zusätzlich um eine winklig, vorzugsweise etwa rechtwinklig, zur ersten Drehachse (12a) verlaufende dritte Schwenkachse derart schwenkbar gelagert ist, dass eine Schwenkbewegung um diese dritte Schwenkachse eine Änderung der Fahrtrichtung bewirkt, die Griffstütze (6) eine Lenkstange ist und eine Lenkmechanik (50) vorgesehen ist, die bestimmte Bewegungen der Griffstütze (6) in Schwenkbewegungen des ersten Rades (12) um die dritte Schwenkachse umwandelt, in axialem Abstand vom ersten Rad (12) ein drittes Rad (14) vorgesehen ist, das in der gleichen Weise wie das erste Rad (12) gelagert ist, wobei der axiale Abstand mindestens geringfügig größer als die Breite des zwischen den ersten und dritten Rädern (12, 14) befindlichen Abschnittes des an der Griffstütze (6) zu befestigenden Gepäckstückes (16) ist, das dritte Rad (14) zusätzlich um eine winklig, vorzugsweise etwa rechtwinklig, zur ersten Drehachse (14a) verlaufende vierte Schwenkachse (14b) derart schwenkbar gelagert ist, dass eine Schwenkbewegung um diese vierte Schwenkachse (14b) eine Änderung der Fahrtrichtung bewirkt, und die Lenkmechanik (50) vorgesehen ist, bestimmte Bewegungen der Griffstütze (6) ebenfalls in Schwenkbewegungen des dritten Rades (14) um die vierte Schwenkachse umzuwandeln,
und mit Arretierungsmitteln (54, 54a, 70, 72) zur Arretierung der Lenkmechanik (50), welche so ausgebildet sind, dass sie nur im Ruhezustand die Lenkmechanik (50) in einer neutralen Stellung, vorzugsweise etwa für den Geradeauslauf, arretieren,
**dadurch gekennzeichnet, dass** die Arretierungsmittel einen Drehhebel (54), der am proximalen Ende (6b) der Griffstütze (6) gegenüber dieser drehfest angeordnet ist und in dessen freiem Ende (54a) eine Aussparung (72) ausgebildet ist, und einen Stift (70) aufweisen, der radial an einem Gelenk (26) angeordnet ist, das um eine etwa parallel zur ersten Schwenkachse (23) verlaufende fünfte Schwenkachse (26a) schwenkbar und gegenüber dem flächigen Element (4) drehfest angeordnet ist, wobei die Anordnung und Ausrichtung des Drehhebels (54) und der Aussparung (72) in dessen freiem Ende (54a) sowie des radialen Stiftes (70) am Gelenk (26) derart getroffen ist, dass im Ruhezustand der Stift (70) von der Aussparung (72) aufgenommen wird, wenn die Griffstütze (6) in eine solche Längsstellung gedreht wird, in der sich das erste Rad (12) und das dritte Rad (14) in ihrer Geradeausstellung befinden.

2. Gerät nach Anspruch 1,
**dadurch gekennzeichnet, dass** das zweite Rad (20) zusätzlich um eine etwa in Fahrtrichtung (A) verlaufende zweite Schwenkachse (21) schwenkbar am flächigen Element (4) angeordnet und mit der Griffstütze (6) über einen Mechanismus (28, 30) gekoppelt ist, der eine Schwenkbewegung der Griffstütze (6) gegenüber dem flächigen Element (4) um die erste Schwenkachse (23) in eine Schwenkbewegung des zweiten Rades (20) um die zweite Schwenkachse (21) derart umwandelt, dass die zweite Drehachse (20a) des zweiten Rades (20) in dem Ruhezustand einen größeren Winkel gegenüber dem flächigen Element (4) als in dem Betriebszustand aufweist.

3. Gerät nach Anspruch 2, **dadurch gekennzeichnet, dass** die zweite Drehachse (20a) des zweiten Rades (20) gegenüber dem flächigen Element (4) in dem Ruhezustand in einem Winkel von etwa 90° und in dem Betriebszustand in einem Winkel von etwa 0° ausgerichtet ist.

4. Gerät nach Anspruch 2 oder 3, **dadurch gekennzeichnet, dass** der Mechanismus eine Zug-Schub-Stange (28) aufweist, die über ein vom Klappgelenk beabstandetes Gelenk (26) an der Griffstütze (6) angelenkt, entlang des flächigen Elementes (4) geführt und mit einem am flächigen Element (4) angeordneten Getriebe (30) gekoppelt ist, welches eine Längsbewegung der Zug-Schub-Stange (28) in die Schwenkbewegung des zweiten Rades (20) um die zweite Schwenkachse (21) umwandelt.

5. Gerät nach Anspruch 4, **dadurch gekennzeichnet, dass** das Gelenk (26) an einer Stelle der Griffstütze (6), welche sich im Betriebszustand an oder unterhalb der Unterseite (4b) des flächigen Elementes (4) befindet, und die Zug-Schub-Stange (28) an der Unterseite des flächigen Elementes (4b) angeordnet ist.

6. Gerät nach Anspruch 4 oder 5, **dadurch gekennzeichnet, dass** das Getriebe (30) einen um die zweite Schwenkachse (21) drehbar, jedoch in axialer Richtung im Wesentlichen ortsfest gelagerten, vorzugsweise hülsenförmigen, Rotationskörper (34) aufweist, an dessen Mantel mindestens eine winklig zur zweiten Schwenkachse (21) verlaufende Nut (36) ausgebildet ist, in die ein an der Zug-Schub-Stange (28) angeordnetes, stiftförmiges Nockenelement (38) ragt.

7. Gerät nach mindestens einem der Ansprüche 2 bis 6, **dadurch gekennzeichnet, dass** das zweite Rad (20) um die zweite Drehachse (20a) drehbar an einer Gabel (18) gelagert ist, welche um die zweite Schwenkachse (21) schwenkbar am flächigen Element (4) angeordnet ist.

8. Gerät nach den Ansprüchen 6 und 7, **dadurch gekennzeichnet, dass** die Gabel (18) und der Rotationskörper (34) axial zueinander ausgerichtet und drehfest miteinander verbunden sind.

9. Gerät nach mindestens einem der vorangegangenen Ansprüche, **dadurch gekennzeichnet, dass** die Griffstütze mindestens zwei zueinander teleskopierbar angeordnete Elemente aufweist.

10. Gerät nach mindestens einem der vorangegangenen Ansprüche, **dadurch gekennzeichnet, dass** die Griffstütze (6) Mittel zur, vorzugsweise mittigen und/oder symmetrischen, Befestigung eines Gepäckstückes (16) an der Griffstütze (6) aufweist.

11. Gerät nach mindestens einem der vorangegangenen Ansprüche, **gekennzeichnet durch** Arretiermittel (60) zur lösbaren Arretierung eines Gepäckstückes an einem Abschnitt des fahrbaren Gerätes (2a), insbesondere einem Querbalken (10a).

12. Gerät nach Anspruch 11, **dadurch gekennzeichnet, dass** die Arretiermittel Halteclips (60) aufweisen.

13. Gerät nach mindestens einem der vorangegangenen Ansprüche, **dadurch gekennzeichnet, dass** im Ruhezustand die Griffstütze (6) und das flächige Element (4) im Wesentlichen parallel zueinander liegen.

14. Gerät nach mindestens einem der vorangegangenen Ansprüche, **dadurch gekennzeichnet, dass** im Ruhezustand die Griffstütze (6) und das flächige Element (4) im Wesentlichen aneinander liegen.

## Claims

1. Moveable device, comprising
a planar element (4),
at least one first wheel (12) mounted to rotate about a first rotary axis (12a),
a handle support (6) which has one end (6a) distal from the planar element (4), which supports a handle (8), and one end (6b) proximal to the planar element (4),
a folding joint located adjacent to the first wheel (12), which connects the proximal end (6b) of the handle support (6) to the planar element (4) to be pivotable about a first pivot axis (23) such that in an operating state the handle support (6) is aligned at an angle to the planar element (4), preferably perpendicular or almost perpendicular thereto, and thus the distal end (6a) of the handle support (6) has a maximum distance from the planar element (4) and in an idle state the distal end (6a) of the handle support (6) has a minimum distance from the planar element (4),
at least one second wheel (20) which is mounted to rotate about a second rotary axis (20a), which second wheel is arranged at an end of the planar element (4) distanced from the arrangement comprising the first wheel and the folding joint,
wherein the first wheel (12) is additionally mounted pivotably about an angular third pivot axis, extending preferably approximately perpendicular to the first rotary axis (12a) such that a pivotal movement about this third pivot axis leads to a change of the direction of movement, the handle support (6) is a steering rod, and a steering mechanism (50) is provided which converts certain movements of the handle support (6) into pivotal movements of the first wheel (12) about the third pivot axis, a third wheel (14) is provided at an axial distance from the first wheel (12), which third wheel is mounted in the same way as the first wheel (12), wherein the axial distance is at least slightly greater than the width of the section located between the first and the third wheels (12, 14) of the piece of luggage (16) to be fastened on the handle support (6), the third wheel (14) is additionally mounted pivotably about an angular fourth pivot axis (14b), extending preferably approximately perpendicular to the first rotary axis (14a) such that a pivot movement about this fourth pivot axis (14b) leads to a change in the direction of movement and the steering mechanism (50) is also provided to convert certain movements of the handle support (6) also into pivotal movements of the third wheel (14) about the fourth pivot axis,
and with locking means (54, 54a, 70, 72) for locking the steering mechanism (50), which are designed such that they only lock the steering mechanism (50) in a neutral position in the idle state, preferably for movement straight ahead,
**characterised in that**
the locking means comprise a rotary lever (54) which is arranged on the proximal end (6b) of the handle support (6) secured in a non-rotational manner relative to the latter and a recess (72) is formed in its free end (54a) and a pin (70), which is arranged radially on a joint (26) which is arranged to be pivotable about a fifth pivot axis (26a) parallel to the first pivot axis (23) and secured in a non-rotational manner relative to the planar element (4), wherein the arrangement and alignment of the rotary lever (54) and the recess (72) in its free end (54a) and the radial pin (70) on the joint (26) is set such that in the idle state the pin (70) is received by the recess (72) when the handle support (6) is rotated into such a longitudinal position in which the first wheel (12) and the third wheel (14) are in a straight-ahead position.

2. Device according to claim 1,
**characterised in that** the second wheel (20) is arranged additionally on the planar element (4) pivotably about a second pivot axis (21) extending approximately in the direction of movement (A) and is coupled to the handle support (6) via a mechanism (28, 30), which converts a pivot movement of the handle support (6) relative to the planar element (4) about the first pivot axis (23) into a pivotal movement of the second wheel (20) about the second pivot axis (21) such that the second rotary axis (20a) of the second wheel (20) has a greater angle relative to the planar element (4) in the idle state than in the operating state.

3. Device according to claim 2, **characterised in that** the second rotary axis (20a) of the second wheel (20) is aligned at an angle of approximately 90° relative to the planar element (4) in its idle state and at an angle of approximately 0° in the operating state.

4. Device according to claim 2 or 3, **characterised in that** the mechanism comprises a pull-push rod (28), which is linked by a joint (26) distanced from the folding joint on the handle support (6), guided along the planar element (4) and coupled to a transmission (30) arranged on the planar element (4), which converts a longitudinal movement of the pull-push rod (28) into the pivotal movement of the second wheel (20) about the second pivot axis (21).

5. Device according to claim 4, **characterised in that** the joint (26) is arranged on a point of the handle support (6) located in the operating state on or below the lower side (4b) of the planar element (4) and the pull-push rod (28) is arranged on the lower side of the planar element (4b).

6. Device according to claim 4 or 5, **characterised in that** the transmission (30) comprises a rotary body (34), preferably sheath-like, which is rotational about the second pivot axis (21), but essentially fixed in position in the axial direction, with at least one groove (36) being provided on its casing extending at an angle to the second pivot axis (21), with the pin-shaped cam element (38) arranged on the pull-push rod (28) projecting into it.

7. Device according to at least one of claims 2 to 6, **characterised in that** the second wheel (20) is mounted on a fork (18) to be rotatable about the second rotary axis (20a), which fork is arranged on the planar element (4) to be pivotable about the second pivot axis (21).

8. Device according to claims 6 and 7, **characterised in that** the fork (18) and the rotary body (34) are axially aligned to each other and connected to each other in a non-rotational manner.

9. Device according to at least one of the preceding claims, **characterised in that** the handle support comprises at least two elements arranged telescopically relative to one another.

10. Device according to at least one of the preceding claims, **characterised in that** the handle support (6) comprises means for preferably centrally and/or symmetrically fastening a piece of luggage (16) onto the handle support (6).

11. Device according to at least one of the preceding claims, **characterised by** locking means (60) for the detachable locking of a piece of luggage on a section of the moveable device (2a), particularly a cross bar (10a).

12. Device according to claim 11, **characterised in that** the locking means comprise holding clips (60).

13. Device according to at least one of the preceding claims, **characterised in that** in the idle state the handle support (6) and the planar element (4) are aligned essentially parallel to one other.

14. Device according to at least one of the preceding claims, **characterised in that** in the idle state the handle support (6) and the planar element (4) essentially bear against one another.

## Revendications

1. Engin mobile, avec
un élément (4) plat,
au moins une première roue (12) montée de manière rotative autour d'un premier axe de rotation (12a),
un support de poignée (6), qui présente une extrémité distale (6a) par rapport à l'élément (4) plat, qui supporte une poignée (8), et une extrémité proximale (6b) par rapport à l'élément (4) plat,
une articulation pliante se trouvant de manière adjacente par rapport à la première roue (12), qui relie l'extrémité proximale (6b) du support de poignée (6) à l'élément (4) plat de manière à pouvoir pivoter autour d'un premier axe de pivotement (23) de telle manière que dans un état de fonctionnement, le support de poignée (6) est orienté par rapport à l'élément (4) plat selon un angle de préférence à peu près droit ou quasiment droit et ainsi l'extrémité distale (6a) du support de poignée (6) présente une distance maximale par rapport à l'élément (4) plat et dans un état de repos, l'extrémité distale (6a) du support de poignée (6) présente une distance minimale par rapport à l'élément (4) plat,
au moins une deuxième roue (20) montée de manière rotative autour d'un deuxième axe de rotation (20a), qui est disposée au niveau d'une extrémité, éloignée de l'ensemble composé d'une première roue et d'une articulation pliante, de l'élément (4) plat,
dans lequel la première roue (12) est montée de manière à pouvoir pivoter en supplément autour d'un troisième axe de pivotement s'étendant de manière angulaire, de préférence à peu près à angle droit par rapport au premier axe de rotation (12a) de telle manière qu'un déplacement par pivotement autour dudit troisième axe de pivotement entraîne une modification du sens de déplacement, le support de poignée (6) est un guidon et un mécanisme de direction (50) est prévu, qui transforme des mouvements définis du support de poignée (6) en mouvements par pivotement de la première roue (12) autour du troisième axe de pivotement, une troisième roue (14) est prévue à une distance axiale par rapport à la première roue (12), qui est montée de la même manière que la première roue (12), dans lequel la distance axiale est au moins légèrement plus grande que la largeur de la section, se trouvant entre les premières et troisièmes roues (12, 14), du bagage (16) à fixer au niveau du support de poignée (6), la troisième roue (14) est montée de manière à pouvoir pivoter en supplément autour d'un quatrième axe de pivotement (14b) s'étendant de manière angulaire, de préférence à peu près à angle droit, par rapport au premier axe de rotation (14a) de telle manière qu'un mouvement par pivotement autour dudit quatrième axe de pivotement (14b) entraîne une modification du sens de déplacement, et le mécanisme de direction (50) est prévu pour transformer des mouvements définis du support de poignée (6) également en des mouvements par pivotement de la troisième roue (14) autour du quatrième axe de pivotement,
et avec des moyens d'arrêt (54, 54a, 70, 72) pour l'arrêt du mécanisme de direction (50), lesquels sont réalisés de telle sorte qu'ils arrêtent seulement dans l'état de repos le mécanisme de direction (50) dans une position neutre, de préférence à peu près pour la stabilité directionnelle,
**caractérisé en ce que** les moyens d'arrêt présentent un levier de rotation (54), qui est disposé au niveau de l'extrémité proximale (6b) du support de poignée (6) de manière solidaire en rotation par rapport à celle-ci et dans l'extrémité libre (54a) duquel un évidement (72) est réalisé, et une tige (70), qui est disposée de manière radiale au niveau d'une articulation (26), qui est disposée de manière à pouvoir pivoter autour d'un cinquième axe de pivotement (26a) s'étendant à peu près de manière parallèle par rapport au premier axe de pivotement (23) et de manière solidaire en rotation par rapport à l'élément (4) plat, dans lequel l'agencement et l'orientation du levier de rotation (54) et de l'évidement (72) dans l'extrémité libre (54a) de celui-ci ainsi que de la tige (70) radiale au niveau de l'articulation (26) sont adaptés de telle manière que dans l'état de repos, la tige (70) est logée par l'évidement (72) quand le support de poignée (6) est tourné dans une telle position longitudinale, dans laquelle la première roue (12) et la troisième roue (14) se trouvent dans leur stabilité directionnelle.

2. Engin selon la revendication 1,
**caractérisé en ce que** la deuxième roue (20) est disposée en supplément au niveau de l'élément (4) plat de manière à pouvoir pivoter autour d'un deuxième axe de pivotement (21) s'étendant à peu près dans un sens de déplacement (A) et est couplée au support de poignée (6) par l'intermédiaire d'un mécanisme (28, 30), qui transforme un mouvement par pivotement du support de poignée (6) par rapport à l'élément (4) plat autour du premier axe de pivotement (23) en un mouvement par pivotement de la deuxième roue (20) autour du deuxième axe de pivotement (21) de telle manière que le deuxième axe de rotation (20a) de la deuxième roue (20) présente dans l'état de repos un angle plus grand par rapport à l'élément (4) plat que dans l'état de fonctionnement.

3. Engin selon la revendication 2, **caractérisé en ce que** le deuxième axe de rotation (20a) de la deuxième roue (20) est orienté par rapport à l'élément (4) plat dans l'état de repos selon un angle d'environ 90° et dans l'état de fonctionnement selon un angle d'environ 0°.

4. Engin selon la revendication 2 ou 3, **caractérisé en ce que** le mécanisme présente une barre de traction-poussée (28), qui est articulée au niveau du support de poignée (6) par l'intermédiaire d'une articulation (26) tenue à distance de l'articulation pliante, est guidée le long de l'élément (4) plat et est couplée à un engrenage (30) disposé au niveau de l'élément (4) plat, lequel transforme un mouvement longitudinal de la barre de traction-poussée (28) en un mouvement de pivotement de la deuxième roue (20) autour du deuxième axe de pivotement (21).

5. Engin selon la revendication 4, **caractérisé en ce que** l'articulation (26) est disposée au niveau d'un emplacement du support de poignée (6), lequel se trouve dans l'état de fonctionnement au niveau du ou sous le côté inférieur (4b) de l'élément (4) plat, et la barre de traction-poussée (28) est disposée au niveau du côté inférieur de l'élément (4b) plat.

6. Engin selon la revendication 4 ou 5, **caractérisé en ce que** l'engrenage (30) présente un corps de rotation (34), de préférence en forme de douille, monté de manière à pouvoir tourner autour du deuxième axe de pivotement (21), toutefois de manière sensiblement stationnaire dans la direction axiale, au niveau de l'enveloppe duquel est réalisée au moins une rainure (36) s'étendant de manière angulaire par rapport au deuxième axe de pivotement (21), dans laquelle un élément de came (38) en forme de tige disposé au niveau de la barre de traction-poussée (28) dépasse.

7. Engin selon au moins l'une quelconque des revendications 2 à 6, **caractérisé en ce que** la deuxième roue (20) est montée de manière à pouvoir tourner autour du deuxième axe de rotation (20a) au niveau d'une fourche (18), laquelle est disposée au niveau de l'élément plat (4) de manière à pouvoir pivoter autour du deuxième axe de pivotement (21).

8. Engin selon les revendications 6 et 7, **caractérisé en ce que** la fourche (18) et le corps de rotation (34) sont orientés de manière axiale l'un par rapport à l'autre et sont reliés l'un à l'autre de manière solidaire en rotation.

9. Engin selon au moins l'une quelconque des revendications précédentes, **caractérisé en ce que** le support de poignée présente au moins deux éléments disposés de manière télescopique l'un par rapport à l'autre.

10. Engin selon au moins l'une quelconque des revendications précédentes, **caractérisé en ce que** le support de poignée (6) présente des moyens pour la fixation, de préférence au centre et/ou symétrique, d'un bagage (16) au niveau du support de poignée (6).

11. Engin selon au moins l'une quelconque des revendications précédentes, **caractérisé par** des moyens d'arrêt (60) pour arrêter de manière amovible un bagage au niveau d'une section de l'engin (2a) mobile, en particulier au niveau d'une poutre transversale (10a).

12. Engin selon la revendication 11, **caractérisé en ce que** les moyens d'arrêt présentent des clips de maintien (60).

13. Engin selon au moins l'une quelconque des revendications précédentes, **caractérisé en ce que** dans l'état de repos, le support de poignée (6) et l'élément (4) plat se situent de manière sensiblement parallèle l'un par rapport à l'autre.

14. Engin selon au moins l'une quelconque des revendications précédentes, **caractérisé en ce que** dans l'état de repos, le support de poignée (6) et l'élément (4) plat se situent sensiblement l'un au niveau de l'autre.
